# EUROPEAN PATENT APPLICATION

(11) **EP 2 645 220 A2**
(43) Date of publication of application: **02.10.2013**
(21) Application number: 13160883.8
(22) Date of filing: 25.03.2013
(51) Int. Cl.: G06F 3/0482

(54) **Method for providing GUI to display list of items in terminal and apparatus thereof**

(30) Priority: 26.03.2012 KR 20120030442
(71) Applicant: Samsung Electronics Co., Ltd, Gyeonggi-do 443-742 (KR)
(72) Inventor: Yoo, Jiwoong, Gyeonggi-do 443-742 (KR)
(74) Representative: Nederlandsch Octrooibureau

(57) **Abstract**

A method and a terminal for displaying a list of items are provided. The method includes determining items to be displayed, each item having a title, determining a set of items in which at least one of a length and a rate of a coinciding portion of the titles of the determined items is greater than a preset value, displaying the set using a portion that coincides with the titles of the items, as the title of the set, receiving a set selection input, and displaying a list of items included in a set selected by the set selection input.

## Description

### BACKGROUND OF THE INVENTION

### 1. Field of the Invention:

The present invention relates to a method for providing a graphic user interface. More particularly, the present invention relates to a method for providing a graphic user interface which displays a list of items in a terminal having a display unit of a limited size.

### 2. Description of the Related Art:

When a list is displayed on a display unit of a terminal, the size of the display unit is typically sufficient when displaying the title of items, and thus it is possible to display the entire list. However, as the size of the terminal is reduced for increased portability, the size of the display unit is becoming limited.

When displaying a list of items on the display unit of a limited size, the size of the display unit may not be sufficient for displaying the entire title of items.

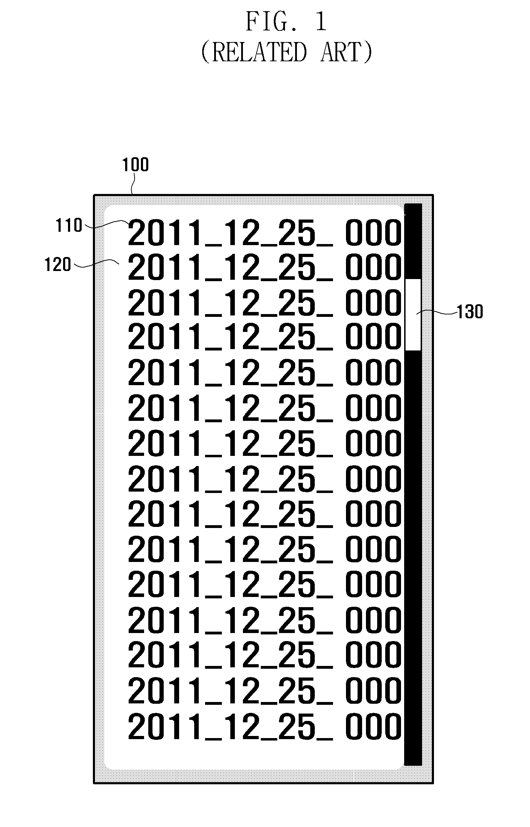

FIG. 1 illustrates a list of items displayed in a terminal according to the related art.

Referring to FIG. 1, a list of items is displayed in which each item contains a file name and an extension. A total of 200 files from "2011_12_25_00001.jpg" to "2011_12_25_00200.jpg" and a total of five files from "text 001.mp4" to "text contents 005.mp4" are displayed. The title 110 and 120 of the item can be the entire file name including the extension and can be displayed by the display unit 100. Since the width of the display unit 100 is limited, the entire title 110 and 120 of the item cannot be displayed. In this case, when a user selects a certain item, the entire name of the file is shown while scrolling in a certain direction or by a pop-up. In such a case, the user must select a file while scrolling the scroll unit 130 so as to find a desired file.

Therefore, a need exists for a method and apparatus for displaying a list of items in a display unit having a limited size to improve user convenience.

### SUMMARY OF THE INVENTION

Aspects of the present invention are to address at least the above-mentioned problems and/or disadvantages and to provide at least the advantages described below. Accordingly, an aspect of the present invention is to provide a method and apparatus for providing a Graphic User Interface (GUI) which efficiently displays a list of items in a terminal having a limited display unit.

In accordance with an aspect of the present invention, a method for displaying a list of items in a terminal is provided. The method includes determining items to be displayed, each item having a title, determining a set of items in which at least one of a length and a rate of a coinciding portion of the titles of the determined items is greater than a preset value, displaying the set using a portion that coincides with the titles of the items, as the title of the set, receiving a set selection input, and displaying a list of items included in a set selected by the set selection input.

In accordance with another aspect of the present invention, a terminal for displaying a list of items is provided. The terminal includes a storage unit which can store information including the title of items, an input unit which can receive a user's input, a display unit which can display information stored in the storage unit and an input received through the input unit, and a controller which controls to determine items to be displayed by the display unit among the items stored in the storage unit, to determine a set of items in which at least one of a length and a rate of a coinciding portion of the titles of the determined items is greater than a preset value, to display the set by the display unit using part of the coinciding portion in the titles of the items as the title of the set, and to display the list of items included in a set selected according to a set selection input inputted to the input unit by the display unit.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 illustrates a list of items displayed in a terminal according to the related art;

FIG. 2 is a block diagram illustrating a terminal according to an exemplary embodiment of the present invention;

FIG. 3 is a flowchart illustrating a method of displaying a list of items according to an exemplary embodiment of the present invention;

FIG. 4 illustrates a display unit that displays a list of items according to an exemplary embodiment of the present invention;

FIG. 5 illustrates a display unit that displays a list of items according to an exemplary embodiment of the present invention;

FIG. 6 illustrates a display unit that displays a list of items after an item selection input is received according to an exemplary embodiment of the present invention; and

FIG. 7 illustrates a display unit that displays a list of items after an item selection input is received according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In exemplary embodiments of the present invention, an item displayed in a terminal may be a file name, a value including the title of stored contents, the title of transmitted and/or received data, and the like.

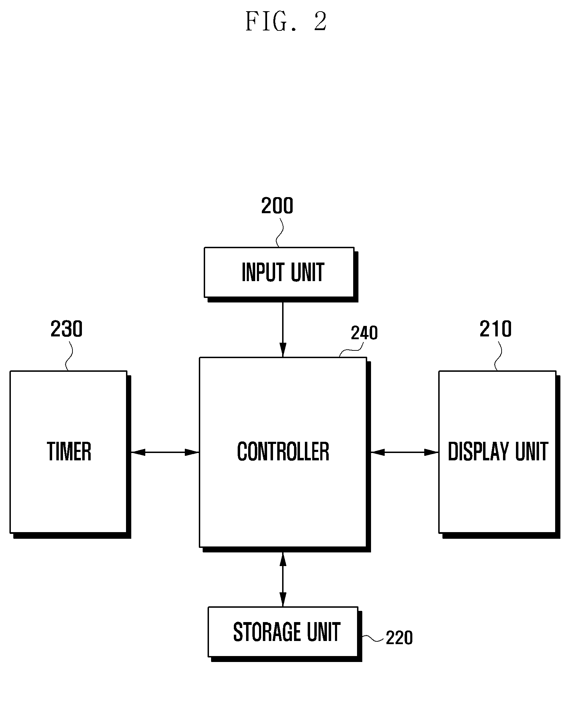

FIG. 2 is a block diagram illustrating a terminal according to an exemplary embodiment of the present invention.

Referring to FIG. 2, a terminal can include an input unit 200 which can receive a user's input, a display unit 210 which can display a screen including status information of the terminal, a storage unit 220 which can store information including a title of an item, a timer 230 which can determine a time flow, and a controller 240 which can control the display unit 210 to display a screen based on an input inputted through the input unit 200, data stored in the storage unit 220, and time measured by the timer 230.

The input unit 200 can receive the user's input. The type of the input unit 200 can include at least one of a button, a touch screen, a digitizer, and the like and is not limited by the following descriptions of exemplary embodiments of the present invention.

An input received by the input unit 200 can include at least one of a set selection input, a set search input, a set selection cancelation input, and the like.

In an exemplary embodiment of the present invention, in the case of a touch screen, the set selection input can include at least one of touching on a displayed set list, touching two or more times within a certain time period, dragging to an arbitrary area, and the like. The set search input can include at least one of touching the set list for a certain time period, a slide in the displayed set list, and the like. Further, a set selection cancelation input can be the same input as the set selection input.

In an exemplary embodiment of the present invention, in the case of a button, the set selection input can include receipt of a certain button input or receipt of two or more clicks within a certain time period in the displayed set list. Further, in the case of a set search input, a cursor may be placed on the title of a certain set by moving the cursor by a button input. Likewise, whenever the cursor is placed on the title of a certain set and a certain time period passes as determined by the timer 230, the title of the set can be scrolled.

The set selection input may include displaying items included in the selected set. The search input is an input for displaying the entire title of the set in case the entire title of the selected set is not displayed. In case the set search is inputted, the title of the set can be scrolled or a pop-up can be displayed on the display unit 210. The set selection cancellation input may include deleting the display of items included in the selected set.

The display unit 210 can display a screen by the control of the controller 240. The display unit 210 can include at least one of a Liquid Crystal Display (LCD), an Active Matrix Organic Light Emitting Diode (AMOLED), and the like. An exemplary method of displaying a list by the display unit 210 will be explained later.

The storage unit 220 can store information including the title of the item. The stored information can include at least one of a file name, a file extension, a contents title, a contents type, and the like. Further, in the case of storing items in a file format, the information can include at least one of a file size, a stored time, and the like. The storage unit 220 can provide necessary information by the control of the controller 240 and store data transmitted from the controller 240 again.

The controller 240 can display a list of items stored in the storage unit 220 by the display unit 210 based on an input inputted through the input unit 200. An exemplary control method of the controller 240 will be explained later.

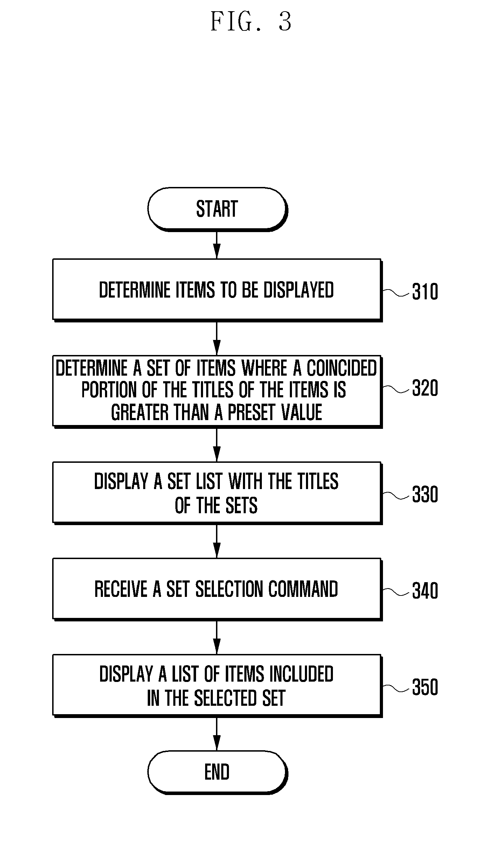

FIG. 3 is a flowchart illustrating a method of displaying a list of items according to an exemplary embodiment of the present invention.

Referring to FIGs. 2 and 3, a list of items to be displayed can be determined at step 310. In an exemplary embodiment of the present invention, the determining of the items can be controlled by the controller 240. The controller 240 can determine items to be displayed by selecting part of items stored in the storage unit 220 by an input received through the input unit 200.

In case there are items whose titles coincide with each other by more than a certain or preset value among items determined to be displayed at step 310, the items can be determined as a set at step 320. For example, the preset value may include at least one of a case in which more than a certain number of letters from the starting word of the title coincide with each other among titles of the items, a case in which the number of the same letters from the starting word of the title occupies a rate greater than a certain rate of the entire title, a case in which the number of the same letters in the entire title is greater than a certain number, and a case in which the length of the same letters in the entire title is greater than occupies a rate greater than a certain rate. Further, when the above items are determined as a set, at least one of extension information, contents information, and the like can be included in the criteria.

In the case of the determined set, part of the coincided portion in the title of the items included in the set can be the title of the determined set. For example, if there are 200 files from "2011_12_25_00001.jpg" to "2011_12_25_00200.jpg", and the 200 file names contain 16 coinciding letters including "2011_12_25_00" and ".jpg". The controller 240 can determine the 200 files as one set, and the title of the set can include all or part of "2011_12_25_00" and ".jpg".

If the controller 240 determines a set of items to be displayed and the name of the set, the set can be displayed by the display unit 210 using part of the coinciding portion in the title of the item as the title of the set at step 330. A plurality of sets can be displayed according to a result of step 320, and a set indicator, which can indicate the list of a set, can also be displayed.

A user's set selection input can be received through the input unit 200 at step 340. In an exemplary embodiment of the present invention, in the case of a touch screen, the set selection input can include at least one of touching in a displayed set list, touching two or more times within a certain time interval, dragging to an arbitrary area, and the like.

The list of items included in the set selected by the set selection input can be displayed at step 350. The selected set can include a plurality of items, and the title of the items included in the selected set can be displayed by the display unit 210.

The title of the item can include at least one of the file name, the contents type, and the like. Further, when displaying the item, only a portion, which does not coincide with the title of the set in the title of the item, may be displayed.

Further, the title of the set selected by the set selection input can also be displayed. At this time, the title can be a portion which coincides with the title of the item included in the selected set.

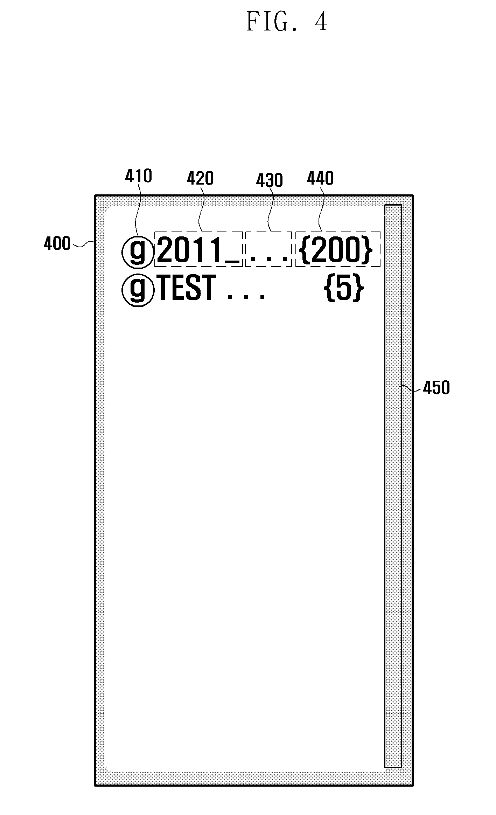

FIG. 4 illustrates a display unit that displays a list of items according to an exemplary embodiment of the present invention.

Referring to FIG. 4, a plurality of set lists are displayed by a display unit 400. In an exemplary embodiment of the present invention, a set list can include at least one of a set indicator 410, a set title 420, an omission indicator 430 and the number of items 440 included in the set. Further, a scroll unit 450, which can scroll a screen at one end, can be included.

The set indicator 410 can indicate that an adjacent list is the title of the set. The list displayed by the display unit 400 can be the title of the set or the title of the item. Hence, the type of the title, where the user is indicated, can be known by displaying the set indicator 410.

The set title can be part of a portion which coincides with the title of the item included in the set. In an exemplary embodiment of the present invention, the set of the set title 420 can include a total of 200 files from "2011_12_25_00001.jpg" to "2011_12_25_00200.jpg". Hence, the coinciding portion is "2011_12_25_00" and part of the portion "2011_" can be indicated as the title of the set.

The omission indicator 430 indicates that the entire set title 420 cannot be displayed by the display unit 400 and can be in various forms depending on an exemplary embodiment of the present invention.

The number of items 440 can be the number of items included in a set having the set title 420. Likewise, a total of 205 items can be displayed as two sets in one screen by displaying items in the form of a set.

Further, after receiving a selection cancelation input, in case the selected set is cancelled, the screen can be converted into a list display screen.

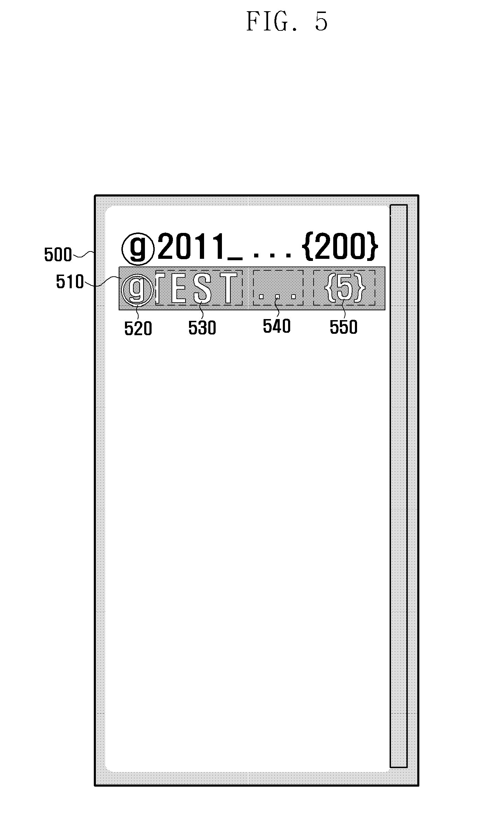

FIG. 5 illustrates a display unit that displays a list of items according to an exemplary embodiment of the present invention.

Referring to FIG. 5, the list of two sets is displayed by a display unit 500, and the list of sets can include a set indicator 520, a set title 530, an omission indicator 540 and the number of items 550. In an exemplary embodiment of the present invention, the state 510 where a search input has been received is displayed in the set of the second line. The items included in the second line are a total of 5 items from "test 001.mp4" to "test contents 005.mp4".

If a certain time period passes after the search input is received, the set title 530 can be scrolled in one direction. Likewise, by scrolling the set title 530, the entire name of the set can be read without selecting the set.

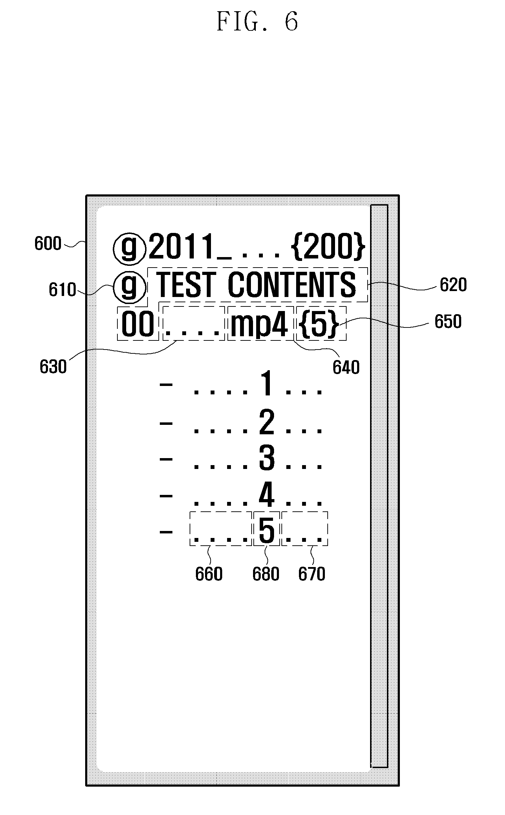

FIG. 6 illustrates a display unit that displays a list of items after an item selection input is received according to an exemplary embodiment of the present invention.

Referring to FIG. 6, two set titles can be displayed by a display unit 600. In an exemplary embodiment of the present invention, a selection input of selecting a set of the second line has been received. If a set selection input received, a set indicator 610, a set title 620 and 640, an omission indicator 630, and the number of items 650 can be displayed. The set title 620 and 640 can display an entire portion that coincides with the title of the item included in the selected set so that the entire name of the selected set can be displayed according to reception of the set selection input.

The set title 620 and 640 can include the entirety of a coinciding portion with the items. In an exemplary embodiment of the present invention, the coinciding portion is "text contents 00" 620 and "mp4" 640. At this time, the non-coinciding portion can be indicated by the omission indicator 630. The length of the omission indicator 630 can be changed depending on the non-coinciding portion. Likewise, the name of the set can be easily recognized by showing the entire selected set title according to the set selection input.

Further, items included in the selected set can be displayed according to a set selection input. The set selected in an exemplary embodiment of the present invention can include a total of 5 items from "test 001.mp4" to "test contents 005.mp4". When indicating the item, only a portion, which is not included in the selected set in the title of the item, can be displayed. In an exemplary embodiment of the present invention, the item title 680 is not included in the set title 620 and 640. An omission indicator 660 and 670, which can display that there is an omitted title at the front and back sides, can be additionally displayed at the right and left sides of the item title 680.

Likewise, the entire title of items included in the selected set can be easily recognized by allowing the user to recognize the combination of the set title 620 and 640 and the item title 680.

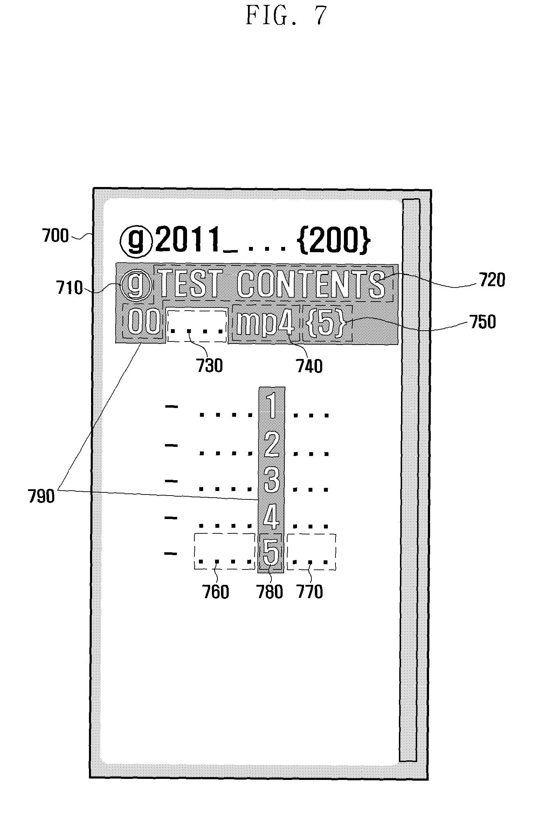

FIG. 7 illustrates a display unit that displays a list of items after an item selection input is received according to an exemplary embodiment of the present invention.

Referring to FIG. 7, two set titles can be displayed by a display unit 700. In the illustrated example, a selection input, which selects a set of the second line, has been received. If a set selection input is received, a set indicator 710, a set title 720 and 740, an omission indicator 730, and the number of items 750 can be displayed. The set title 720 and 740 can indicate an entire portion which coincides with the title of the item included in the selected set so that the entire name of the selected set can be displayed according to reception of the set selection input.

Further, the items included in the set selected according to the set selection input can be displayed. In an exemplary embodiment of the present invention, the selected set can include a total of 5 items from "test 001.mp4" to "test contents 005.mp4". When displaying the item, only a portion, which is not included in the selected set, can be displayed in the title of the item. In an exemplary embodiment of the present invention, the item title 780 is not included in the set title 720 and 740. An omission indicator 760 and 770, which can indicate that there is an omitted title at the front and back sides, can be further displayed at the right and left sides of the item title 780.

In the case of the set title 720 and 740 and the item title 780, an area 790, which is distinguished from the surrounding area, can be displayed for improving visibility of the user depending on an exemplary embodiment of the present invention.

Likewise, the user can easily recognize the entire name of the item by displaying the set title 720 and 740 and the item title 780 to be distinct from the surrounding area.

According to an exemplary embodiment of the present invention, when displaying a list of items in a limited display screen, items with similar titles are grouped and displayed, and thus user convenience is improved.

Further, in a case in which there are a plurality of files whose titles are only partly different, the overlapped portions are displayed as a common portion and only different portions are separately displayed, and thus the size used by the display unit can be reduced.

Hence, when displaying a list of items in a terminal having a limited display unit, user convenience is improved.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for displaying a list of items in a terminal, the method comprising:
determining items to be displayed, each item having a title;
determining a set of items in which at least one of a length and a rate of a coinciding portion of the titles of the determined items is greater than a preset value;
displaying the set using a portion that coincides with the titles of the items as the title of the set;
receiving a set selection input; and
displaying a list of items included in a set selected by the set selection input.

2. The method of claim 1 or 2, further comprising:
receiving a set search input after the displaying of the set; and
displaying the entirety of a coinciding portion of the titles of the items included in a set corresponding to the set search input.

3. The method of claim 1, 2 or 3, wherein the displaying of the items includes displaying the entirety of a coinciding portion of the titles of items of a set selected by the received selection input.

4. The method of claim 3, further comprising:
displaying a portion, which does not coincide with the title of the set and the titles of the items included in the set, by an omission indicator in the title of the set.

5. The method of any preceding claim, wherein the title of the item displayed in the list of items includes a portion that is not displayed in the title of the set in the titles of the items when displaying the list of items included in the selected set.

6. The method of claim 5, wherein the displaying of the items comprises displaying a portion displayed in the title of the set in the title of the item with an omission indicator.

7. The method of claim any preceding, further comprising:
receiving a set selection cancellation input; and
removing the display of the list of items included in a set cancelled by the set selection cancellation input.

8. A terminal for displaying a list of items, the terminal comprising:
a storage unit which can store information including the title of items;
an input unit which can receive a user's input;
a display unit which can display information stored in the storage unit and an input received through the input unit; and
a controller which controls to determine items to be displayed by the display unit among the items stored in the storage unit, to determine a set of items in which at least one of a length and a rate of a coinciding portion of the titles of the determined items is greater than a preset value, to display the set by the display unit using part of the coinciding portion in the titles of the items as the title of the set, and to display the list of items included in a set selected according to a set selection input inputted to the input unit by the display unit.

9. The terminal of claim 8, wherein the controller displays the entirety of a coinciding portion of the titles of the items included in a set corresponding to the set search input in case a set search input is received in the input unit.

10. The terminal of claim 9 or 10, wherein the controller displays the entirety of a coinciding portion of the titles of items of a set selected by the received selection input in the display unit.

11. The terminal of claim 10, wherein the controller displays a portion, which does not coincide with the title of the set and the titles of the items included in the set in the title of the set, with an omission indicator in the display unit.

12. The terminal of any preceding claim, wherein the controller displays a portion, which is not displayed in the title of the set in the title of the item, when displaying the list of items in the display unit.

13. The terminal of claim 12, wherein the controller displays the portion displayed in the title of the set in the title of the item with an omission indicator when displaying the list of the items in the display unit.

14. The terminal of claim 12, wherein the controller controls the display unit to display the title of the set and the title of the item to be distinct from the surrounding area.

15. The terminal of any preceding claim, wherein the controller controls the display unit to remove a display of the list of items included in a set cancelled by the set selection cancellation input in case a set selection cancellation input is inputted in the display unit.
